# EUROPÄISCHE PATENTANMELDUNG

(11) **EP 3 875 757 A1**
(43) Veröffentlichungstag der Anmeldung: **08.09.2021**
(21) Anmeldenummer: 21162803.7
(22) Anmeldetag: 08.05.2018
(51) Int. Cl.: F03D 17/00, F03D 80/50, F03D 80/55

(54) **GERÄT ZUR INSPEKTION VON WINDENERGIEANLAGEN**

(30) Priorität: 17.05.2017 DE 102017110714
(62) Teilanmeldung aus: 18723492.7
(71) Anmelder: composite consult GmbH, 19061 Schwerin (DE)
(72) Erfinder: KRAMPE, Nina Katharina, Lane Cove North, New South Wales NSW 2066 (AU); KRAMPE, Timothy, 48151 Münster (DE)
(74) Vertreter: Winter, Brandl - Partnerschaft mbB

(57) **Zusammenfassung**

Das hier beschriebene Gerät kann zur Inspektion oder Wartung von Geräten, beispielsweise Rotorblättern von Windenergieanlagen, eingesetzt werden. Eine Rahmenkonstruktion kann das Gerät, z.B. ein Rotorblatt, umgreifen und für eine Inspektion oder Untersuchung oder Reinigung des Rotorblatts oder sonstigen Gegenstands eingesetzt werden. Die Rahmenkonstruktion weist eine z.B. ein Rotorblatt oder einen sonstigen Gegenstand im Einsatz umfassende und umgebende innere Öffnung auf. Ein oder mehrere Propeller für eine laterale Bewegung im Wesentlichen parallel zum Boden erlauben eine Horizontalbewegung der Rahmenkonstruktion und damit beispielsweise eines Roboters für die Untersuchung des Rotorblatts. Eine vertikale Bewegung des Roboters oder sonstigen Untersuchungsgeräts kann durch eine Seilzugaufhängung gesteuert werden, so dass die Höhenlage der Rahmenkonstruktion und damit des Untersuchungsgeräts geändert werden kann. An der Rahmenkonstruktion kann mindestens ein Zustandserfassungssystem oder Reinigungssystems oder sonstiges Kontrollsystem zum Erfassen des Zustands von Rotorblättern, zur Reinigung derselben oder zur Kontrolle oder Behandlung vorgesehen sein. Eine Steuerstation und/oder Auswertestation kann am Boden oder einem Transporter oder sonstigen Gerät vorgesehen sein.

## Beschreibung

Die Erfindung betrifft ein Gerät zur Inspektion, Reinigung oder sonstigen Untersuchung von Gegenständen, beispielsweise Rotorblättern von Windenergieanlagen.

Aus der WO 2014/059964 A1 ist ein solches Gerät in Form eines Roboters zur Inspektion von Rotorblättern von Windenergieanlagen bekannt. Der Roboter ist mit einer Mehrzahl von Propellern für eine Flugbewegung des Roboters versehen, über die die Höhenlage des Roboters, beispielsweise der Rahmenkonstruktion derselben, bezogen auf den Erdboden oder die Gondel der Windenergieanlage (WEA), gesteuert werden kann.

Aus der EP 1 583 905 A2 ist ein Gerät zum Reinigen eines Rotorblatts einer Windenergieanlage offenbart.

Mit der Erfindung wird eine effektive, zuverlässige Vorrichtung gemäß Anspruch 1 geschaffen.

Weiterbildungen der Erfindung sind in den Unteransprüchen angegeben.

Die Erfindung erlaubt eine einfache und zuverlässige Lagepositionierung, z.B. vertikale Positionierung des Geräts, z.B. Rahmenkonstruktion oder Roboter bzw. sonstigen Untersuchungsgeräts oder Reinigungsgeräts.

Mit der Erfindung wird somit eine alternative Aufhängung und Lageregelung eines Geräts, beispielsweise eines Roboters gemäß WO 2014/059964 A1, über eine Seilaufhängung, z.B. einen Seileinzug, bereitgestellt.

Die Vorrichtung oder ein Gerät hat eine Rahmenkonstruktion für die Untersuchung einer Einrichtung wie etwa eines Rotorblatts für die Inspektion, Reinigung oder Wartung desselben, mit einem Seileinzug, an dem die Rahmenkonstruktion derart aufgehängt ist, dass sie in vertikaler Richtung durch Bewegung des Seileinzugs verstellbar ist.

Denkbar wäre einen oder mehrere Propeller oder Rotor/en für eine Bewegung der Rahmenkonstruktion in horizontaler Richtung vorzusehen. Die Rahmenkonstruktion weist jeweils einen, vorzugsweise zwei, oder mehr Rotoren für eine Horizontalverstellung der Rahmenkonstruktion auf.

Das Gerät kann eine Seilwinde haben, die das Gewicht der Rahmenkonstruktion oder eines Systems über Seile und eine Umlenkrolle trägt, und mit Seilen für eine Höhenregelung und Positionierung der Rahmenkonstruktion oder des Systems in einer y-Achse am Blatt einer Windenergieanlage verbunden ist.

Seile können von der Umlenkrolle bis zu Knoten verbunden sein, und ggfs. von den Knoten können jeweils zwei Seile als V bis zu jeweiligen Ecken der Rahmenkonstruktion oder des Systems geführt sein.

Seile können von jeweils einem Knoten mit der Rahmenkonstruktion oder dem System verbunden sein, und mit Umlenkrollen, die an den vier Ecken der Rahmenkonstruktion oder des Systems zum Seileinzug vorhanden sind.

Das Gerät kann mindestens einen Seileinzug für die Bewegung eines Seils an oder in der Rahmenkonstruktion oder dem System haben, wobei der Seileinzug jeweils einen Linearantrieb enthält oder durch eine Trommelwinde oder Seildurchlaufwinde gebildet ist.

Das Gerät kann Vorrichtungen zur Inspektion und Untersuchung der Einrichtung oder eines Rotorblatts einer Windenergieanlage haben.

Das Gerät kann einen Roboter zur Inspektion von Rotorblättern von Windenergieanlagen haben.

Das Gerät nach einem der vorhergehenden Aspekte, insbesondere ein Roboter zur Inspektion von Rotorblättern von Windenergieanlagen, wobei die Rahmenkonstruktion eine ein Rotorblatt im Einsatz umgebende innere Öffnung, einen oder mehrere an der Rahmenkonstruktion angeordnete Propeller, und ein an der Rahmenkonstruktion angebrachtes Zustandserfassungssystem zur vorzugsweise berührungsfreien Untersuchung der Rotorblätter aufweist.

Das Gerät nach einem der vorhergehenden Aspekte kann eine Andock- und/oder Führungseinrichtung zum Andocken und/oder Führen eines Roboters an dem Rotorblatt haben,
bei dem die Andock- und/oder Führungseinrichtung vorzugsweise einen oder mehrere verstellbare Arme aufweist, und/oder
bei dem die Arme der Andock- und/oder Führungseinrichtung federvorgespannt und/oder motorisch verstellbar sind, und/oder
die Arme der Andock- und/oder Führungseinrichtung mit einer Beschichtung wie etwa Puffern oder Gummipuffern versehen sind, und/oder
die Andock- und/oder Führungseinrichtung an den Schmalseiten der Rahmenkonstruktion angebracht ist, und/oder
die Andock- und/oder Führungseinrichtung oder Arme derselben motorisch antreibbar ist, um sich entlang des zu untersuchenden Rotorblatts nach oben oder unten zu bewegen, und/oder
die Andock- und/oder Führungseinrichtung oder Arme mindestens eine durch diese antreibbare Rolle aufweist, die einen mit dem Rotorblatt in Verbindung stehenden umlaufenden Riemen antreibt oder direkt mit dem zu untersuchenden Rotorblatt in Berührung steht, um den Roboter, optional unter Zusammenwirkung mit den Propellern, entlang des zu untersuchenden Rotorblatts zu bewegen, und/oder
eine Steuerung mit einem Wechselrichter oder Umrichter, die bzw. der an der Rahmenkonstruktion angebracht ist und zur Umwandlung von über das Kabel zugeführter Versorgungsspannung dient, vorgesehen ist, und/oder
mit zwei oder mehr, vorzugsweise vier Gruppen aus jeweils einem oder mehreren, vorzugsweise vier Propellern, die an den beiden Längsseiten und/oder Querkanten der Rahmenkonstruktion angebracht sind, und/oder
das Zustandserfassungssystem mindestens eine Kamera und/oder eine Ultraschalluntersuchungseinrichtung aufweist.

Gerät nach einem der vorhergehenden Aspekte, vorzugsweise mit einem oder mehreren Lagerböcken und einem oder mehreren Seilen, über die die Rahmenkonstruktion am Erdboden oder sonstigen Komponente wie etwa einem Gebäude oder Fahrzeug oder sonstiger Ausgestaltung befestigt werden kann, derart, dass es in seiner Höhenlage variabel einstellbar ist und somit die Höhe des Systems oder Roboters variabel einstellbar ist.

Gerät oder System nach einem der vorhergehenden Aspekte, mit vorzugsweise einer oder mehreren zusätzlichen Winden, über die ein oder mehrere Seile zur Höheneinstellung unterhalb der Rahmenkonstruktion oder des Systems führbar sind.

System mit einem Gerät, insbesondere einem Roboter, nach einem der vorhergehenden Aspekte, vorzugsweise mit einer fest oder mobil installierten Station, z.B. einer Steuer- und Auswertestation, und/oder einem Kabel zur Verbindung eines Roboters mit der Station, und/oder einem Seilzug und/oder einem oder mehreren Propeller.

Gerät oder System nach einem der vorhergehenden Aspekte, vorzugsweise mit einem Kabel, z.B. ein Strom- und/oder Datenkabel zur Verbindung des Roboters mit einer beispielsweise am Boden oder auf einem Fahrzeug befindlichen Station, insbesondere einer Steuer- und Auswertestation.

Gerät oder System nach einem der vorhergehenden Aspekte, mit mindestens einem Dämpfer, Abstandshalter oder Stabilisator, der die Rahmenkonstruktion gegenüber einem Turm einer Windenergieanlage stabilisiert oder gegenüber unerwünschten Kontakten sichert. Der Dämpfer kann teleskopartig, elektrisch oder hydraulisch ausfahrbar ist, wobei an einem Rahmen mittig ein Abstandshalter angeordnet sein kann oder an beiden Ecken am Rahmen ein Paar von Dämpfern oder Abstandshaltern vorgesehen ist.

Weitere Merkmale und Einzelheiten der vorliegenden Erfindung werden unter Bezugnahme auf die beigefügten Zeichnungen näher beschrieben. Es zeigen:
Fig. 1 zeigt eine seitliche Ansicht eines Ausführungsbeispiels mit Seilzugaufhängung eines Untersuchungsgeräts, beispielsweise eines Systems oder Roboters 2;
Fig. 2 zeigt einen Grundriss oder eine schematische Darstellung des Systems 2, das als Rahmenkonstruktion ausgebildet sein kann;
Fig. 3 zeigt eine Darstellung eines Eckbereichs des Geräts und der Seilzugaufhängung;
Fig. 4 zeigt eine Seitenansicht des Ausführungsbeispiels gemäß den Figuren 1 bis 3;
Fig. 5 zeigt eine seitliche Ansicht eines weiteren Ausführungsbeispiels mit Seilzugaufhängung und Befestigung am Boden oder einer ortsfesten oder ortsvariablen Verankerung;
Fig. 6 veranschaulicht einen Grundriss in Form einer schematischen Darstellung des Systems 2 mit Rahmenkonstruktion und bodenseitiger Verankerung;
Fig. 7 zeigt ein weiteres Ausführungsbeispiel mit Befestigung oder Lagerung an einem ortsfesten oder ortsvariablen Lagerstück unterhalb des Systems 2, das beispielsweise für kleinere Windenergieanlagen mit einer Gondelhöhe von beispielsweise unterhalb 100 m, oder vorzugsweise unterhalb von 60 m oder 30 m, bezogen auf den Abstand zum Erdboden oder Mastfuss des WEA-Turms ausgelegt ist;
Fig. 8 zeigt Ausgestaltungen eines Ausführungsbeispiels, das ebenfalls für geringere Gondelhöhen mit einem Bodenabstand zum Boden von beispielsweise unter 150 m, 100 m, unterhalb 60 m, oder unterhalb 30 m, bezogen auf den Abstand zwischen der Gondelmitte und dem Erdboden, ausgelegt ist; und
Fig. 9 bis 12 zeigen Ausführungsbeispiele, bei denen mindestens ein zusätzlicher Dämpfer, Abstandshalter oder Stabilisator vorgesehen ist, um eine unerwünschte, gefährliche oder Schaden verursachende Berührung zwischen dem Turm 18 und der Rahmenkonstruktion bzw. dem Roboter oder Untersuchungsgerät 2 zu vermeiden, sodass ein Abstandshalter zur Sicherstellung eines Abstands zum Turm 18 der Windenergieanlage gewährleistet ist.

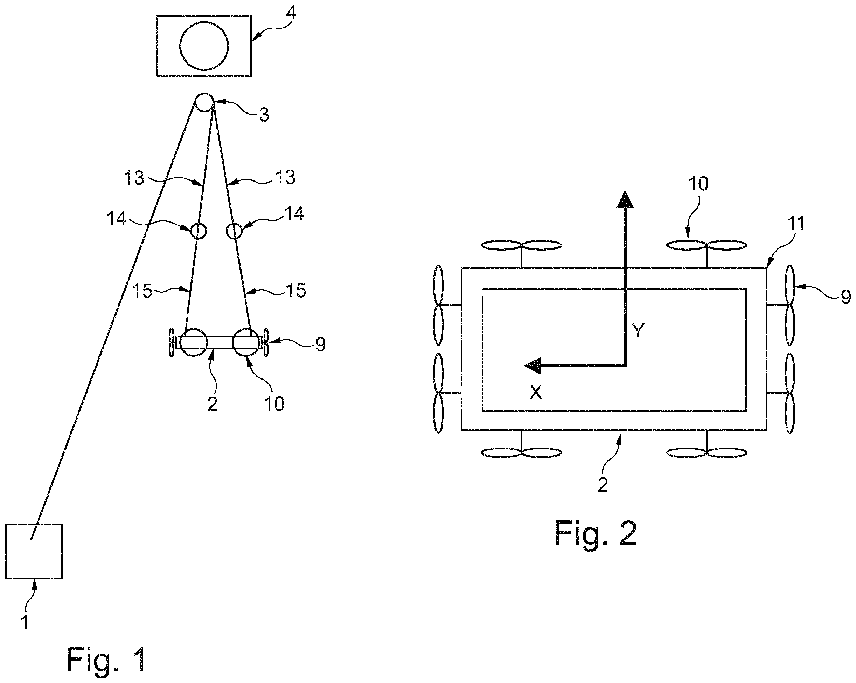

Wie aus der Darstellung der Vorderansicht oder Seitenansicht gemäß Fig. 1 ersichtlich ist, ist eine Winde 1 am Boden oder in einem Transporter oder sonstigen Transportvehikel vorgesehen, so dass das System 2 zum jeweiligen Einsatzort verfahrbar ist. Über die Winde 1 kann die vertikale Höhenlage des Systems 2, beispielsweise eines Roboters gemäß WO 2014/059964 A1, geregelt werden. Eine Umlenkrolle 3 ist unterhalb einer Gondel 4 einer Windenergieanlage, WEA, vorgesehen.

Ein Blattkörper, beispielsweise ein Rotorblatt 5 der Windenergieanlage, die die Gondel 4 aufweist, kann mittels des Systems 2 untersucht werden.

Ein Seileinzug 6 kann für die Höheneinstellung im oder am System 2, beispielsweise dem Roboter, vorgesehen sein.

Der Seileinzug 6 kann gemäß einem oder mehreren Ausführungsbeispielen aus einem Linearantrieb bestehen. Alternativ oder zusätzlich zu einem Linearantrieb kann der Seileinzug 6 auch durch eine Trommelwinde oder eine Seildurchlaufwinde ausgebildet sein. Es ist auch möglich, diese Ausgestaltungen gemeinsam einzusetzen.

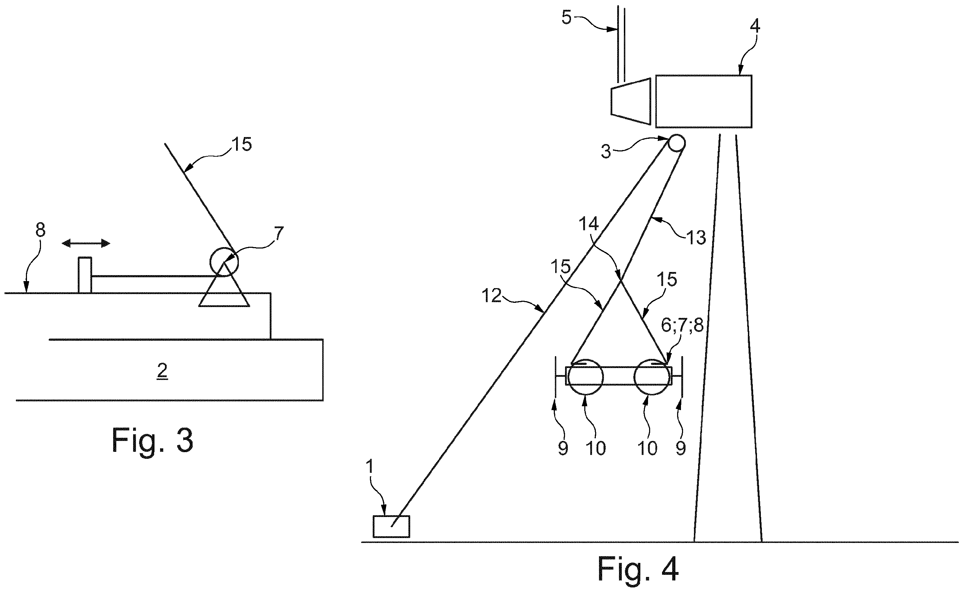

Eine Umlenkrolle 7 kann beispielsweise gemäß Fig. 3 am oder im System 2, d.h. beispielsweise dem Roboter 2, vorgesehen sein.

Ein oder mehrere Propeller 9 für die Positionierung in Richtung der beispielsweise in Fig. 2 eingetragenen Richtung x, d.h. in x-Achsenrichtung,
erlaubt eine Verstellung der seitlichen oder horizontalen Lage des Roboters. Ein oder mehrere weitere Propeller 10 erlauben eine Positionierung der horizontalen Lage des Roboters oder sonstigen Untersuchungsgeräts 2 in Richtung der Achse y gemäß Fig. 2.

Ecken 11 des Systems bzw. des Roboters 2 sind detaillierter in Fig. 3 dargestellt.

Ein Seil 12 des Seileinzugs 6 läuft von der Winde 1 bis zu der Umlenkrolle 3 und über diese weiter bis zum Roboter 2 bzw. der Rahmenkonstruktion oder sonstigen Ausgestaltungen des Geräts 2. Gemäß der Seitenansicht nach Fig. 1 können ein oder mehrere Knoten 14, siehe Fig. 1, vorgesehen sein, um Seile 13 mit den Seilen 15 zu verbinden, wobei die Seile 15 vom Knoten 14 jeweils mit dem System 2 verbunden sind, und zwar über die Umlenkrollen 7 an den vier Ecken 11 des Systems 2 bis zu dem Seileinzug 6.

Bei dem Ausführungsbeispiel gemäß Fig. 1 ist für die vertikale oder auch horizontale Positionierung des Geräts, beispielsweise des Roboters 2, die Seilwinde 1 vorgesehen. Die Positionierung kann hierbei in Richtung der Achse y unter Beibehaltung der vertikalen Höhenlage des Systems 2 erfolgen. Die Seilwinde 1 befindet sich hierbei am Boden, in einem Transporter, oder in einem Tragegestell, das stationär oder auch in horizontaler Richtung beweglich sein kann.

Die Seilwinde 1 übernimmt das Gewicht des Systems 2 über die Seile 12, siehe z.B. Fig. 4. Die Seile 12 können über die Umlenkrolle 3 mit dem Seil 13 verbunden sein und über dieses weiter mit dem oder den Knoten 14. Über die Seile 12, 13, 15 und die Seilwinde 1 ist eine genaue Höhenregelung und Positionierung des Systems 2 in der Richtung der y-Achse am System 2 oder Blatt 5 der Windkraftanlage (WEA) steuerbar.

Von der Winde (Seilwinde) 1 bis zu dem System oder Roboter 2 für die Inspektion, Untersuchung oder sonstige Überprüfung jeweils eines Rotorblatts 5
der Windkraftanlage ist als Seilführung vorgesehen, von der Winde 1 über die Umlenkrolle 3 ein Seil 12 zu spannen und dieses mit den Seilen 13 zu verbinden. Die Seile 13 bestehen jeweils aus beispielsweise zwei Seilen, die in Form eines V von der Umlenkrolle 3 bis zu den Knoten 14 gespannt bzw. mit diesen verbunden werden oder sind. Von den Knoten 14 können jeweils zwei Seile 15 in Form eines V bis zu den jeweiligen Ecken 11 des Systems 2 verbunden werden oder sein.

Bei dem Ausführungsbeispiel kann eine horizontale Lageregelung am System 2 mittels Seileinzügen erfolgen. Die horizontale Lageregelung kann hierbei mittels eines oder mehrerer Seileinzügen 6 erfolgen, wobei eine Linearachse realisiert ist. Hierbei sind die Seile 15 der Seileinzüge 6 an allen vier Ecken 11 des Systems 2 verbunden, wodurch die horizontale Lageregelung gewährleistet ist. An allen vier Ecken 11 des Systems 2 werden die Seile 15 über eine Umlenkrolle mittels einer Linearachse im oder am Rahmen des Systems 2 eingezogen bzw. ausgegeben, um eine horizontale Lage des Systems 2 zu gewährleisten. Die horizontale Lageregelung wird durch eine elektronische Winkelmessung erfasst und gesteuert. Hierzu ist ein elektronisch arbeitendes Winkelmessgerät vorgesehen, dessen Messergebnisse mit einem elektronisch oder durch das System 2 vorgegebenen Sollwinkel bzw. der entsprechenden horizontalen Soll-Lage verglichen und zur horizontalen Lageregelung verwendet werden.

Bei dem beschriebenen und gezeigten Ausführungsbeispiel kann eine Vorschubregelung und Richtungs-Regelung in der x- und der z-Achse durch Propeller 9, 10 erreicht werden. Schub- und Zugpropeller 9 sind beim Ausführungsbeispiel gemäß Fig. 4 an den außenseitigen Rändern des Systems bzw. der Rahmenkonstruktion 2 vorgesehen. Eine seitliche Positionierung in der z-Achse wird durch Propeller 10 gewährleistet, die gemäß Figs. 4 und 1 an den äußeren Randbereichen der Rahmenkonstruktion 2 vorgesehen sind. Hiermit lässt sich die seitliche Positionierung in der z-Achse durch die Propeller 10 gewährleisten. Der genaue Abstand zum Turm der Windenergieanlage (WEA-Turm) wird beim Ausführungsbeispiel durch Laser gemessen und über ein GPS-

System korreliert. Damit lässt sich auch der genaue Winkel zum Turm und zum Blatt der Windenergieanlage einhalten und überprüfen, so dass ein korrektes Einfädeln des Systems 2 im Rahmen der Rahmenkonstruktion eingehalten und überprüft werden kann.

Die Anordnung der Propeller kann in unterschiedlichen Gruppen vorgesehen sein. Beispielsweise können je Seitenkante jeweils zwei Propeller 10 bzw. zwei Propeller 9 vorgesehen sein, wie dies beispielsweise aus Fig. 1, Fig. 2, Fig. 4 ersichtlich ist. Vorzugsweise sind zwei Propeller je Seitenrand vorgesehen, es können aber auch vier Propeller vorgesehen sein, oder es kann auch nur je Seitenrand ein einziger Propeller oder mehr als zwei Propeller 9, 10 vorgesehen sein.

Die vorstehend beschriebenen und in diesen und den weiteren Zeichnungen dargestellten Details können bei weiteren Ausführungsbeispielen der Erfindung in beliebiger freier Form und Anzahl kombiniert werden, und können in beliebiger Weise auch mit allen Ausgestaltungen und Ausführungsbeispielen gemäß der vorstehend genannten WO2014/059964A1 kombiniert werden, wodurch jeweils eigenständige Ausführungsbeispiele geschaffen sind.

Die Rahmenkonstruktion 2 und das entsprechende System beinhalten die zur Messung, Abfrage und Erforschung des Blatts 2 erforderlichen Mess- und Auswerteeinheiten und/oder können mit diesen über entsprechende Signalstrecken oder Messpfade und Auswertungsstrecken in Verbindung stehen.

Bei dem Ausführungsbeispiel, wie es in Fig. 2 dargestellt ist, verläuft die nicht dargestellte Achse z rechtwinklig zu den in Fig. 2 dargestellten Achsen x, y. Dies entspricht bei der Darstellung gemäß Fig. 1 einem Verlauf, der bzgl. der Rahmenkonstruktion 2 nach oben und unten weist, d.h. rechtwinklig zu den beiden dargestellten parallelen Linien der Rahmenkonstruktion 2.

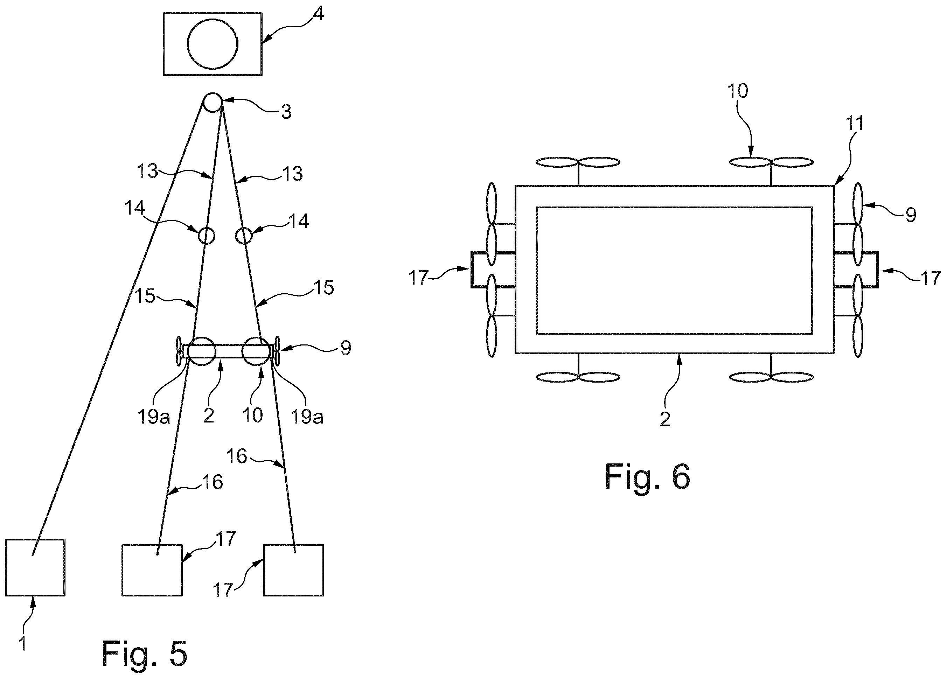

Das Ausführungsbeispiel gemäß Fig. 5 weist die Komponenten gemäß dem vorstehend bereits beschriebenen Ausführungsbeispiel gemäß Fig. 1 auf. Zusätzlich zu den Komponenten des Ausführungsbeispiels gemäß Fig. 1 (und Fig. 2 bis 4) weist das Ausführungsbeispiel gemäß den Fig. 5 bis 8 noch eine zusätzliche, bodenseitige Verankerung über die Lagerböcke 17 auf, an denen Seile 16 befestigt sind, die über Rollen oder Walzen 19 zum System 2 geführt sind und hierbei eine Höheneinstellung der Rahmenkonstruktion 2 oder des Roboters erlauben.

Bei dem Ausführungsbeispiel gemäß Fig. 5 ist jeweils ein Seil 16 zur jeweiligen Umlenkrolle 19 und der Rahmenkonstruktion 2 geführt. Durch den als Lagerbock dienenden Block 17 ist somit die gewünschte Höhenlage des Systems 2 wie gewünscht einstellbar. Seile 19a sind mit der Rahmenkonstruktion 2 verbindbar.

Bei dem Ausführungsbeispiel gemäß Fig. 6 sind die Komponenten des Ausführungsbeispiels gemäß Fig. 5 nicht im Einzelnen dargestellt, wobei die Lagerböcke 17 schematisch angedeutet sind, die unterhalb der Rahmenkonstruktion bodenseitig oder in variabler Weise an einem höhenverstellbaren oder vertikal oder horizontal verschieblichen Element montiert sind.

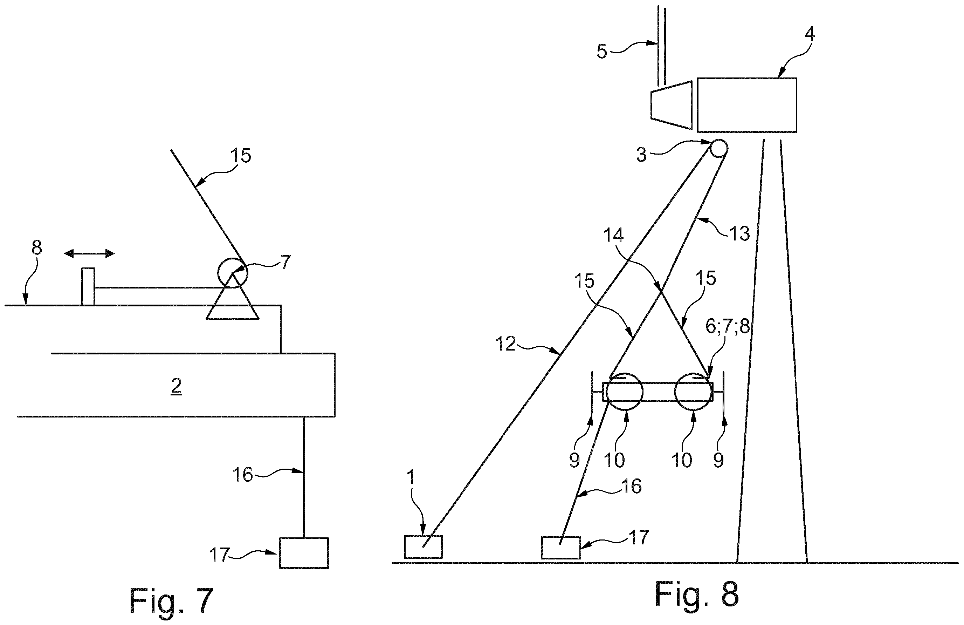

Bei dem Ausführungsbeispiel gemäß den Fig. 7 und 8 ist zusätzlich zu dem Ausführungsbeispiel gemäß den Fig. 3 und 4 eine zusätzliche Lagerung gemäß Lagerblock oder Block 17 vorgesehen, der eine Verankerung und Sicherung des Systems 2 auch bei Windböen oder dergleichen gewährleistet.

Wie aus den Fig. 7 und 8 erkennbar ist, ist ähnlich wie bei dem Ausführungsbeispiel gemäß den Fig. 5 und 6 eine zusätzliche Verankerung gegenüber dem Erdboden über die Komponenten 16, 17, usw. vorgesehen, wobei diese Gestaltung auch für höhere Windenergieanlagenhöhen geeignet ist, vorzugsweise aber bei geringeren WEA-Höhen der Windräder von
beispielsweise unterhalb 60 m oder aber unterhalb eines Werts zwischen 10 m und 150 m zum Einsatz kommt.

Die weiteren Gestaltungen gemäß den Ausführungsbeispielen nach den Fig. 5 bis 8 entsprechen teilweise den Ausführungsbeispielen gemäß den Fig. 1 bis 4, soweit vorstehend nicht abweichend oder anders beschrieben.

Die vorstehend beschriebenen und in den Zeichnungen gezeigten Ausführungsbeispiele können in beliebiger Weise abgeändert werden, um eine Anpassung an die Einsatzhöhe oder Testsicherheit zu erreichen. Das System 2 kann hinsichtlich seiner Ausgestaltung in einer Weise gemäß der vorstehend beschriebenen Variation der Ausführungsbeispiele 1 bis 4 ausgeführt werden, wobei die Rahmenkonstruktion 2 und das System ebenfalls in der vorstehend beschriebenen oder aus der WO 2014/059964 A1 bekannten Weise gestaltet sein kann.

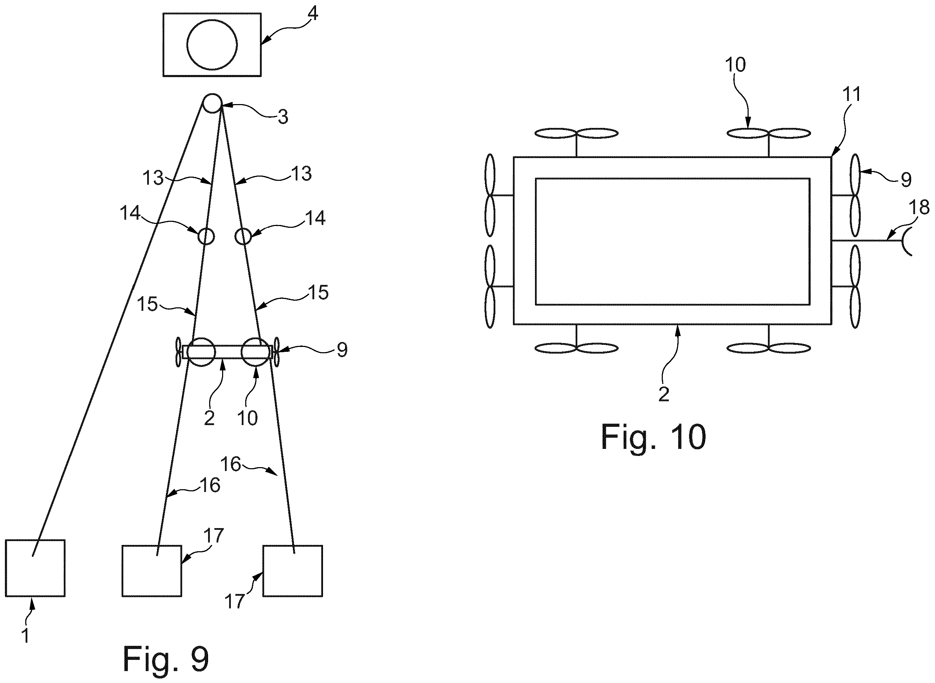

Bei dem Ausführungsbeispiel gemäß den Fig. 9 und 10 ist ein zusätzlicher, beispielsweise horizontal oder mit Horizontalkomponente wirkender Dämpfer oder Stabilisator 18 vorgesehen. Der Dämpfer, Abstandshalter oder Stabilisator 18 kann als eine teleskopartig ausfahrbare Ausgestaltung ausgelegt sein, kann aber auch feste, ausgefahrene Länge aufweisen. In den Fig. 9 bis 12 ist mit dem Bezugszeichen 19 der Turm der Windenergieanlage WEA bezeichnet. Der Abstandshalter 18 kann beispielsweise als teleskopartig ausfahrbarer Stoßdämpfer ausgelegt sein, kann zusätzlich oder alternativ auch als hydraulisch oder elektrisch in Horizontalrichtung ausfahrbarer Dämpfer oder Stabilisator ausgebildet sein. Der Stabilisator 18 kann als Dämpfer beispielsweise links und/oder rechts des Roboters 2 bzw. der Rahmenkonstruktion angeordnet sein. Alternativ kann der Dämpfer oder Abstandshalter 18 auch mittig am Rahmen 2 angeordnet sein. Alternativ oder zusätzlich kann auch an einer oder beiden oder allen Ecken des Rahmens 2 jeweils ein Dämpfer oder Abstandshalter 18 als Paar vorgesehen sein, sodass der Rahmen 2 jeweils halbseitig abgefedert sein kann. Wie aus Fig. 10 erkennbar ist, kann der Abstandshalter 18 zwischen der
Rahmenkonstruktion 2 im Wesentlichen mittig und dem Turm 19 angeordnet sein.

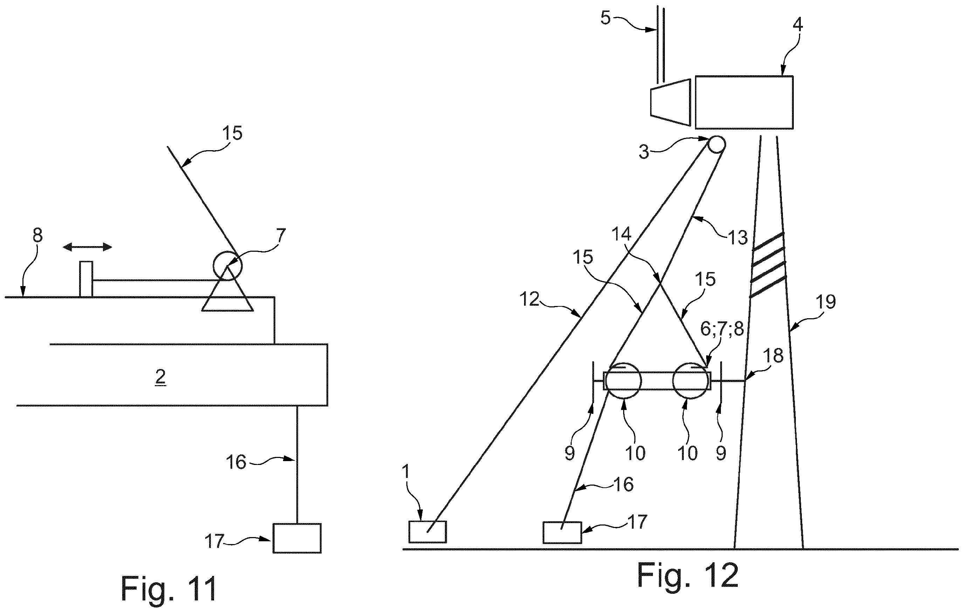

Aus den Fig. 11, 12 ist die Abstützung und Sicherung der Rahmenkonstruktion 2 und damit des Roboters und Untersuchungsgeräts gegenüber dem Turm 19 ersichtlich. Hierdurch ist ebenfalls eine Sicherung oder Stabilisation gegenüber dem Turm 19 erreichbar. Aufgrund der beispielsweise teleskopartig in Horizontalrichtung verfahrbaren Auslegung des Dämpfers 18 können Erschütterungen der Rahmenkonstruktion oder des Roboters 2 zuverlässig vermieden werden. Aufgrund der horizontalen Stoßdämpfung kann die vertikale Aufhängung oder Absicherung des Roboters 2 noch weiter vereinfacht werden, da nun beispielsweise nur noch ein einziges Seil oder ein Seilpaar 16 notwendig ist, um eine bodenseitige Verankerung zu erreichen.

Alle vorstehend beschriebenen und/oder in den Zeichnungen gezeigten Ausgestaltungen der Ausführungsbeispiele können in beliebiger Weise miteinander und beispielsweise mit den Ausgestaltungen gemäß der WO 2014/059964 A1 kombiniert werden, wodurch jeweils eigenständige Ausführungsbeispiele geschaffen sind.

## Patentansprüche

1. Gerät mit einer Rahmenkonstruktion (2) für die Untersuchung einer Einrichtung wie etwa eines Rotorblatts einer Windenergieanlage für die Inspektion, Reinigung oder Wartung desselben, mit einem Seileinzug (6), an dem die Rahmenkonstruktion (2) derart aufgehängt ist, dass sie in vertikaler Richtung durch Bewegung des Seileinzugs verstellbar ist,
mit mindestens einem Seileinzug (6) für die Bewegung eines Seils an oder in der Rahmenkonstruktion (2), wobei der Seileinzug (6) jeweils einen Linearantrieb enthält oder durch eine Trommelwinde oder Seildurchlaufwinde gebildet ist.

2. Gerät nach Anspruch 1, wobei die Rahmenkonstruktion ein Roboter zur Untersuchung der Einrichtung wie etwa eines Rotorblatts ist.

3. Gerät nach einem der vorhergehenden Ansprüche, wobei Seile von der Umlenkrolle (3) bis zu Knoten (14) verbunden sind, und ggfs. von den Knoten (14) jeweils zwei Seile (15) als V bis zu jeweiligen Ecken (11) der Rahmenkonstruktion (2) geführt sind.

4. Gerät nach einem der vorhergehenden Ansprüche, wobei die Rahmenkonstruktion jeweils einen, vorzugsweise zwei, oder mehr Rotoren (9, 10) oder Propeller für eine Horizontalverstellung der Rahmenkonstruktion (2) aufweist.

5. Gerät nach einem der vorhergehenden Ansprüche, wobei Seile (15) von jeweils einem Knoten (14) mit der Rahmenkonstruktion (2) verbunden sind, und mit Umlenkrollen (7), die an den vier Ecken (11) der Rahmenkonstruktion (2) zum Seileinzug (6) vorhanden sind.

6. Gerät nach einem der vorhergehenden Ansprüche, mit Vorrichtungen zur Inspektion und Untersuchung der Einrichtung oder eines Rotorblatts einer Windenergieanlage.

7. Gerät nach einem der vorhergehenden Ansprüche, mit einem Roboter zur Inspektion von Rotorblättern von Windenergieanlagen.

8. Gerät nach einem der vorhergehenden Ansprüche, wobei die Rahmenkonstruktion (2) eine ein Rotorblatt im Einsatz umgebende innere Öffnung, einen oder mehrere an der Rahmenkonstruktion (2) angeordnete Propeller, und ein an der Rahmenkonstruktion angebrachtes Zustandserfassungssystem zur vorzugsweise berührungsfreien Untersuchung der Rotorblätter aufweist.

9. Gerät nach einem der vorhergehenden Ansprüche, mit einer Andock- und/oder Führungseinrichtung zum Andocken und/oder Führen eines oder des Roboters an dem Rotorblatt,
bei dem die Andock- und/oder Führungseinrichtung vorzugsweise einen oder mehrere verstellbare Arme aufweist, und/oder
bei dem die Arme der Andock- und/oder Führungseinrichtung federvorgespannt und/oder motorisch verstellbar sind, und/oder
die Arme der Andock- und/oder Führungseinrichtung mit einer Beschichtung wie etwa Puffern oder Gummipuffern versehen sind, und/oder
die Andock- und/oder Führungseinrichtung an den Schmalseiten der Rahmenkonstruktion angebracht ist, und/oder
die Andock- und/oder Führungseinrichtung oder Arme derselben motorisch antreibbar ist, um sich entlang des zu untersuchenden Rotorblatts nach oben oder unten zu bewegen, und/oder
die Andock- und/oder Führungseinrichtung oder Arme mindestens eine durch diese antreibbare Rolle aufweist, die einen mit dem Rotorblatt in Verbindung stehenden umlaufenden Riemen antreibt oder direkt mit dem zu untersuchenden Rotorblatt in Berührung steht, um den Roboter, optional unter Zusammenwirkung mit den Propellern, entlang des zu untersuchenden Rotorblatts zu bewegen, und/oder
eine Steuerung mit einem Wechselrichter oder Umrichter, die bzw. der an der Rahmenkonstruktion angebracht ist und zur Umwandlung von über das Kabel zugeführter Versorgungsspannung dient, vorgesehen ist, und/oder
mit zwei oder mehr, vorzugsweise vier Gruppen aus jeweils einem oder mehreren, vorzugsweise vier Propellern, die an den beiden Längsseiten und/oder Querkanten der Rahmenkonstruktion angebracht sind, und/oder
das Zustandserfassungssystem mindestens eine Kamera und/oder eine Ultraschalluntersuchungseinrichtung aufweist.

10. Gerät nach einem der vorhergehenden Ansprüche, mit einem oder mehreren Lagerböcken (17) und einem oder mehreren Seilen (16), über die die Rahmenkonstruktion (2) am Erdboden oder sonstigen Komponente wie etwa einem Gebäude oder Fahrzeug oder sonstiger Ausgestaltung befestigt werden kann, derart, dass es in seiner Höhenlage variabel einstellbar ist und somit die Höhe des Systems (2) oder Roboters variabel einstellbar ist.

11. Gerät nach einem der vorhergehenden Ansprüche, mit einer oder mehreren zusätzlichen Winden (16, 17), über die ein oder mehrere Seile zur Höheneinstellung unterhalb der Rahmenkonstruktion (2) führbar sind.

12. Gerät nach einem der vorhergehenden Ansprüche, mit einer fest oder mobil installierten Station, z.B. einer Steuer- und Auswertestation, und/oder einem Kabel zur Verbindung eines Roboters mit der Station, und/oder einem Seilzug und/oder einem oder mehreren Propeller.

13. Gerät nach einem der vorhergehenden Ansprüche, mit einem Kabel, z.B. ein Strom- und/oder Datenkabel zur Verbindung des Roboters mit einer beispielsweise am Boden oder auf einem Fahrzeug befindlichen Station, insbesondere einer Steuer- und Auswertestation.

14. Gerät nach einem der vorhergehenden Ansprüche, mit mindestens einem Dämpfer (18), Abstandshalter oder Stabilisator, der die Rahmenkonstruktion (2) gegenüber einem Turm (19) einer Windenergieanlage stabilisiert oder gegenüber unerwünschten Kontakten sichert.

15. Gerät nach Anspruch 14, wobei der Dämpfer (18) teleskopartig, elektrisch oder hydraulisch ausfahrbar ist, wobei an einem Rahmen mittig ein Abstandshalter angeordnet ist oder an beiden Ecken am Rahmen ein Paar von Dämpfern (18) oder Abstandshaltern vorgesehen ist.

16. Gerät mit einer Rahmenkonstruktion (2) für die Untersuchung einer Einrichtung wie etwa eines Rotorblatts einer Windenergieanlage für die Inspektion, Reinigung oder Wartung desselben, mit einem Seileinzug (6), an dem die Rahmenkonstruktion (2) derart aufgehängt ist, dass sie in vertikaler Richtung durch Bewegung des Seileinzugs verstellbar ist,
mit einer Seilwinde, die das Gewicht der Rahmenkonstruktion (2) über Seile (12) und eine Umlenkrolle (3) trägt, und mit Seilen (15) für eine Höhenregelung und Positionierung der Rahmenkonstruktion (2) in einer y-Achse am Blatt (5) einer Windenergieanlage verbunden ist.
